# EUROPEAN PATENT APPLICATION

(11) **EP 2 944 365 A1**
(43) Date of publication of application: **18.11.2015**
(21) Application number: 15157193.2
(22) Date of filing: 02.03.2015
(51) Int. Cl.: B01D 35/153, B01D 35/16, B01D 35/00

(54) **Replaceable oil filter sub-assembly**

(30) Priority: 03.03.2014 US 201414195356
(71) Applicant: A.L. Filter Co., Ltd., 7752862 Ashdod (IL)
(72) Inventor: Ben-Shimon, Yaakov, Rehovot 7647206 (IL); Levy, Itsik, Bat Yam 5949626 (IL); Polak, Ilana, Ashkelon 7842188 (IL)
(74) Representative: Evens, Paul Jonathan

(57) **Abstract**

A replaceable oil filter sub-assembly for use with an oil filter housing (102) having an oil drain passageway (108) extending outwardly from an interior volume (104) of the oil filter housing, the oil filter sub-assembly including a filter element (120) having a filter medium (130) defining an upstream side and a downstream side of the filter element and an oil drain passageway sealing rod assembly (110) having a first end configured for oil sealing engagement with the oil drain passageway (108) of the oil filter housing (102), the oil drain passageway sealing rod assembly (110) being separate from the filter element (120) and extending through the interior volume of the filter housing (102) at the upstream side of the filter element.

## Description

### FIELD OF THE INVENTION

The present invention relates to oil filters for motor vehicles.

### BACKGROUND OF THE INVENTION

Various types of oil filters are known.

### SUMMARY OF THE INVENTION

The present invention seeks to provide an improved oil filter for motor vehicles.

There is thus provided in accordance with a preferred embodiment of the present invention a replaceable oil filter sub-assembly for use with an oil filter housing having an oil drain passageway extending outwardly from an interior volume of the oil filter housing, the oil filter sub-assembly including a filter element having a filter medium defining an upstream side and a downstream side of the filter element and an oil drain passageway sealing rod assembly having a first end configured for oil sealing engagement with the oil drain passageway of the oil filter housing, the oil drain passageway sealing rod assembly being separate from the filter element and extending through the interior volume of the filter housing at the upstream side of the filter element.

Preferably, the filter element includes top and bottom end portions and the oil drain passageway sealing rod assembly extends through at least one of an aperture and a recess formed in at least the bottom end portion. Additionally, the filter medium defines an elongate recess between the top end portion and the bottom end portion.

In accordance with a preferred embodiment of the present invention the replaceable oil filter sub-assembly also includes a top element which is threadably and sealingly engageable with the filter housing and wherein engagement of the top element and the filter housing retains the oil drain passageway sealing rod assembly in sealing engagement with the oil drain passageway of the oil filter housing.

Preferably, the oil drain passageway sealing rod assembly includes an elongate, generally cylindrical portion and a generally tapered second end portion.

In accordance with a preferred embodiment of the present invention the first end includes a sealing ring retaining portion, defining a circumferential recess and a sealing ring seated in the circumferential recess.

There is also provided in accordance with another preferred embodiment of the present invention an oil drain passageway sealing rod assembly, for use with a replaceable oil filter sub-assembly and an oil filter housing having an oil drain passageway extending outwardly from an interior volume of the oil filter housing, the oil drain passageway sealing rod assembly including a first end configured for oil sealing engagement with the oil drain passageway of the oil filter housing, the oil drain passageway sealing rod assembly extending through the interior volume of the filter housing at the upstream side of the filter element.

In accordance with a preferred embodiment of the present invention the sealing rod assembly includes an elongate, generally cylindrical portion and a generally tapered second end portion.

Preferably, the first end includes a sealing ring retaining portion, defining a circumferential recess and a sealing ring seated in the circumferential recess.

There is further provided in accordance with yet another preferred embodiment of the present invention a method for assembling an oil filter assembly, the oil filter assembly including a top element, an oil filter housing, having an oil drain passageway extending outwardly from an interior volume of the oil filter housing, and a replaceable oil filter sub-assembly, the replaceable oil filter sub-assembly including an oil drain passageway sealing rod assembly and a filter element, the method including inserting the oil drain passageway sealing rod assembly into sealing engagement with the oil drain passageway, operatively engaging the top element with the filter element, thereby forming a joined top element and filter element and thereafter, inserting the joined top element and filter element into threadable, sealing engagement with the filter housing.

### BRIEF DESCRIPTION OF THE DRAWINGS

The present invention will be understood and appreciated more fully from the following detailed description, taken in conjunction with the drawings in which:
Fig. 1 is a simplified, partially cut-away illustration of a oil filter assembly constructed and operative in accordance with a preferred embodiment of the present invention in a fully assembled state;
Fig. 2 is a simplified, sectional illustration of the oil filter assembly of Fig. 1, taken along lines II - II in Fig. 1;
Fig. 3 is a simplified exploded view illustration of the oil filter assembly of Figs. 1 & 2;
Figs. 4A, 4B and 4C are simplified illustrations of a housing portion of the oil filter assembly of Figs. 1 - 3;
Figs. 5A & 5B are simplified illustrations of an oil drain passageway sealing rod assembly forming part of the oil filter assembly of Figs. 1 - 3;
Figs. 6A, 6B & 6C are simplified illustrations of a filter element forming part of the oil filter assembly of Figs. 1 - 3;
Figs. 7A & 7B are simplified illustrations of a top element forming part of the oil filter assembly of Figs. 1 - 3;
Fig. 8 is a simplified illustration of a first step in the assembly of the oil filter assembly of Figs. 1 - 3;
Fig. 9 is a simplified illustration of a second step in the assembly of the oil filter assembly of Figs. 1 - 3 and
Fig. 10 is a simplified illustration of a third step in the assembly of the oil filter assembly of Figs. 1 - 3.

### DETAILED DESCRIPTION OF A PREFERRED EMBODIMENT

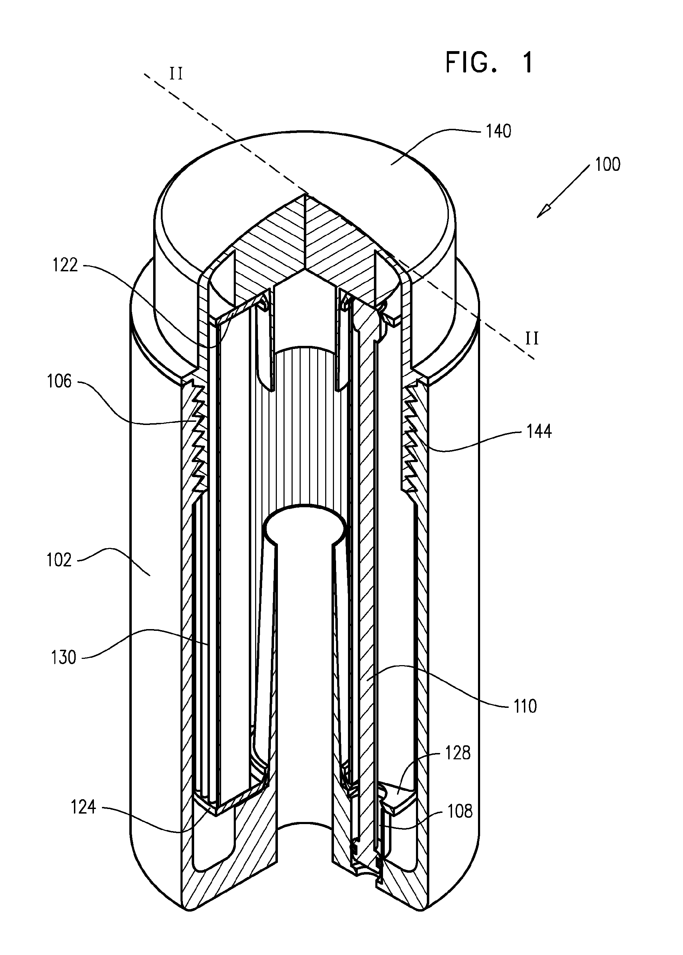

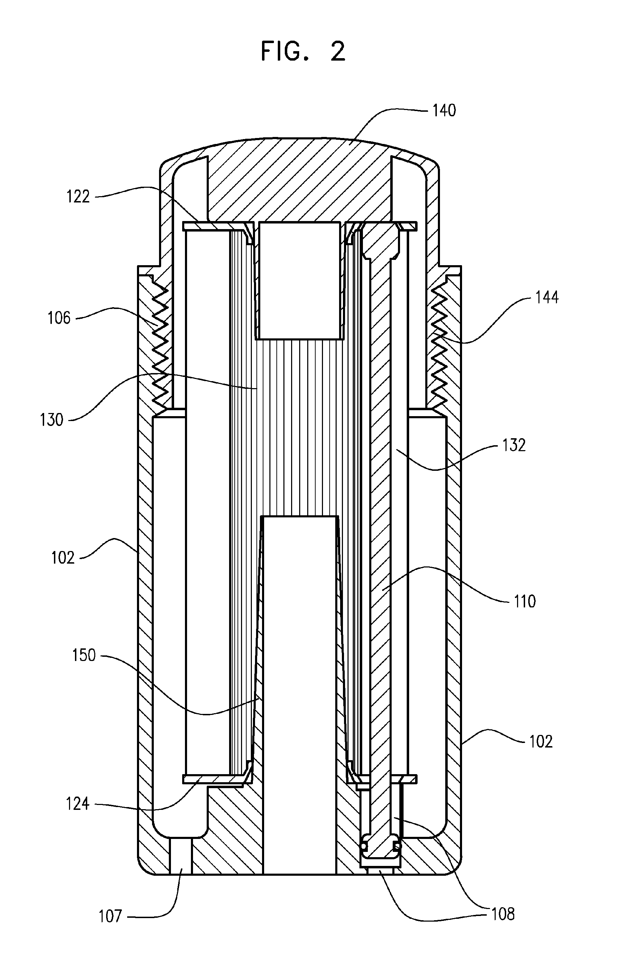

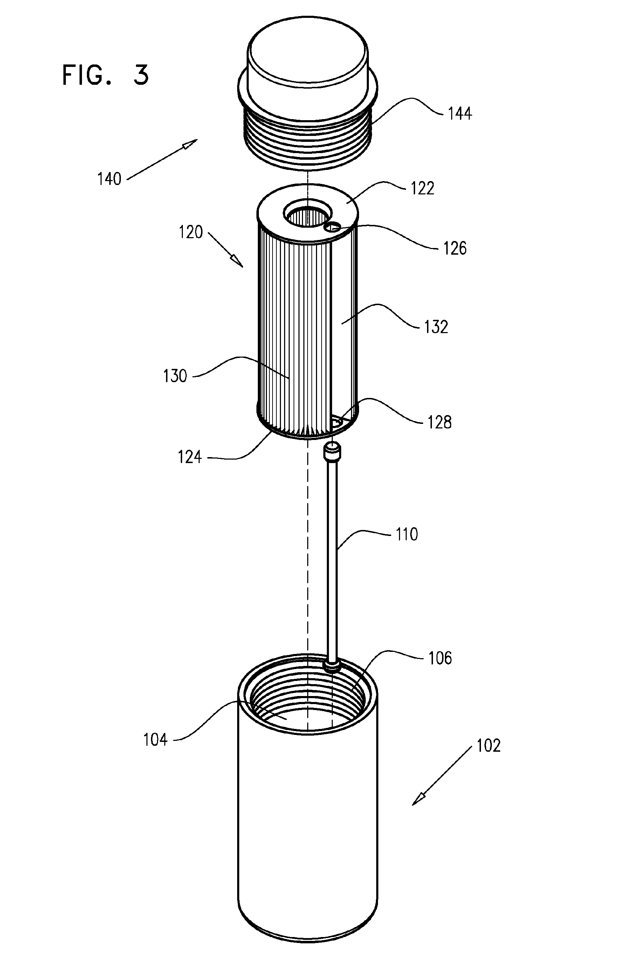

Reference is now made to Fig. 1, which is a simplified, partially cut-away illustration of a oil filter assembly 100, constructed and operative in accordance with a preferred embodiment of the present invention in a fully assembled state, Fig. 2, which is a simplified, sectional illustration of the oil filter assembly of Fig. 1, taken along lines II - II in Fig. 1, and Fig. 3, which is a simplified exploded view illustration of the oil filter assembly of Figs. 1 & 2.

As seen in Figs. 1 - 3, the oil filter assembly 100 comprises a filter housing 102, defining a generally cylindrical inner volume 104 and an internally threaded lip portion 106. Filter housing 102 defines an oil inlet opening 107 at a bottom surface thereof, which communicates between the cylindrical inner volume 104 and the outside of the filter housing 102. Filter housing 102 also defines an oil drain passageway 108 at a bottom surface thereof, which communicates between the cylindrical inner volume 104 and the outside of the filter housing 102.

Oil filter assembly 100 also comprises an oil drain passageway sealing rod assembly 110 for selectably removable sealing engagement with the oil drain passageway 108.

A filter element 120 is arranged for removable placement within the generally cylindrical inner volume 104 and is formed with top and bottom end portions 122 and 124, having mutually aligned apertures 126 and 128 for accommodating oil drain passageway sealing rod assembly 110. End portions 122 and 124 preferably support a generally circumferential pleated filtration medium 130. It is appreciated that the generally circumferential pleated filtration medium 130 is configured to define an elongate recess 132 extending between respective top and bottom end portions 122 and 124, for accommodating oil drain passageway sealing rod assembly 110.

It is appreciated that pleated filtration medium 130 defines an upstream side of filter element 120 external thereto and a downstream side of filter element 120 internal thereto.

A top element 140 is formed with an externally directed threaded lip portion 144 for threaded sealing engagement with internally directed threaded lip portion 106 of filter housing 102, thereby, inter alia, retaining oil drain passageway sealing rod assembly 110 in sealing engagement with oil drain passageway 108.

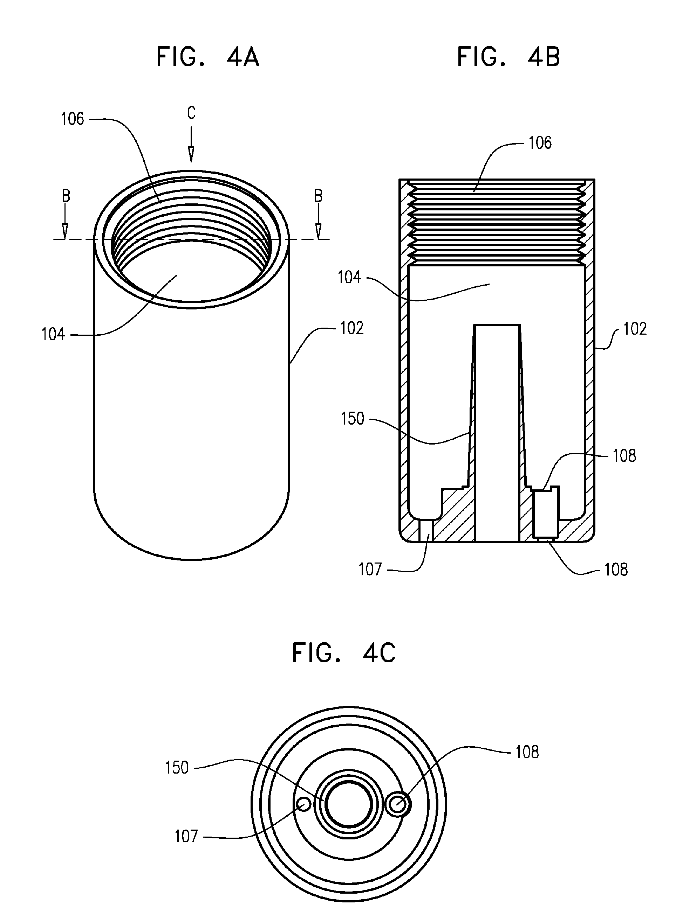

Reference is now made to Figs. 4A, 4B and 4C, which are simplified illustrations of housing portion 102 of the oil filter assembly of Figs. 1 - 3. It is noted that Fig. 4B is a sectional illustration taken along lines B - B in Fig. 4A, which is a pictorial illustration of the housing portion, and Fig. 4C is an interior view of the bottom of generally cylindrical inner volume 104, taken along a direction C indicated in Fig. 4A.

As seen in Figs. 4B and 4C, there is provided an upwardly-directed tapered channel protrusion 150, which extends from the base of housing portion 102 into the generally cylindrical inner volume 104. Oil drain passageway 108 lies outside of and adjacent channel 150.

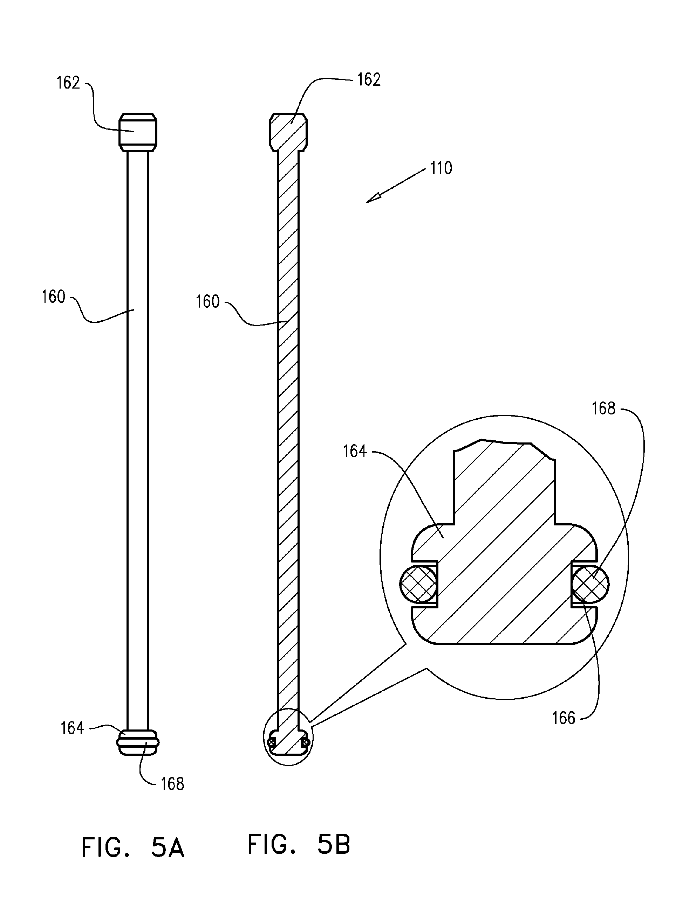

Reference is now made to Figs. 5A & 5B, which are simplified illustrations of drain aperture sealing rod assembly 110, forming part of the oil filter assembly of Figs. 1 - 3. As seen in Figs. 5A & 5B, drain aperture sealing rod assembly 110 includes an elongate, generally cylindrical portion 160 having a top generally tapered end portion 162 and a bottom sealing ring retaining portion 164, defining a circumferential recess 166 in which is seated a sealing ring 168.

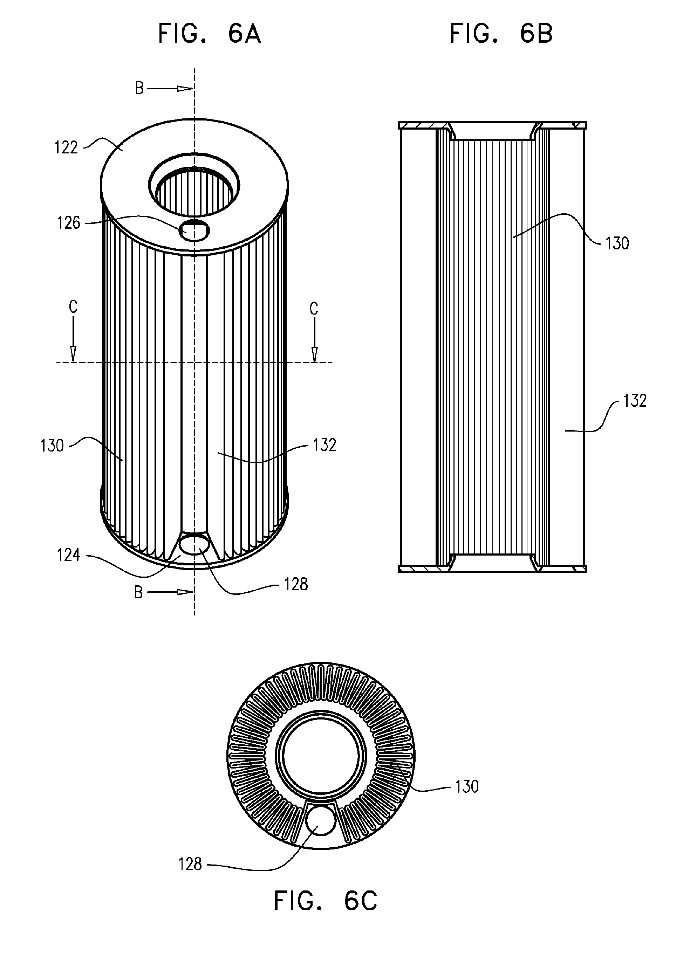

Reference is now made to Figs. 6A, 6B & 6C, which are simplified illustrations of a filter element forming part of the oil filter assembly of Figs. 1 - 3. As noted above, filter element 120 is formed with top and bottom end portions 122 and 124, having mutually aligned apertures 126 and 128 for accommodating oil drain passageway sealing rod assembly 110. End portions 122 and 124 preferably support generally circumferential pleated filtration medium 130. As noted above, generally circumferential pleated filtration medium 130 is configured to define elongate recess 132 extending between respective top and bottom end portions 122 and 124, for accommodating oil drain passageway sealing rod assembly 110.

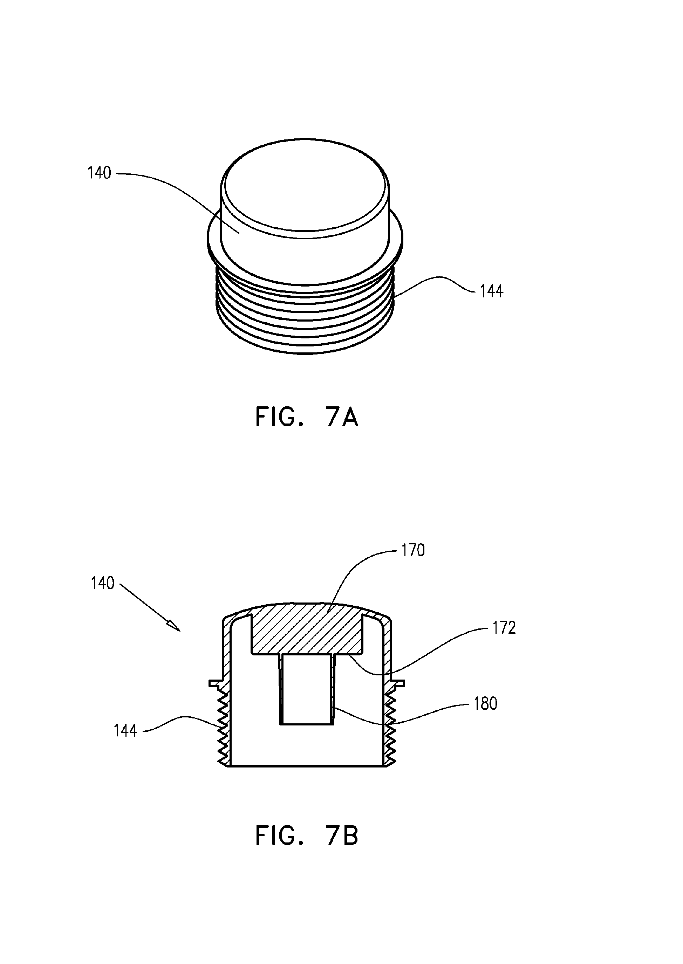

Reference is now made to Figs. 7A & 7B, which are simplified illustrations of top element 140 forming part of the oil filter assembly of Figs. 1 - 3. As noted above, top element 140 is formed with externally directed threaded lip portion 144 for threaded sealing engagement with internally directed threaded lip portion 106 of filter housing 102, thereby, inter alia, retaining oil drain passageway sealing rod assembly 110 in sealing engagement with oil drain passageway 108.

More specifically, it is seen that top element 140 is formed with a downwardly extending protrusion 170 arranged to extend into generally cylindrical inner volume 104. Protrusion 170 is formed with a downwardly-facing surface 172 which engages tapered top end portion 162 of drain aperture sealing rod assembly 110 when the top element 140 is fully threadably and sealingly engaged with the filter housing 102, thereby retaining oil drain passageway sealing rod assembly 110 in sealing engagement with oil drain passageway 108, via sealing ring 168. A central, downwardly extending hollow protrusion 180 is preferably arranged to extend downwardly into generally cylindrical inner volume 104 from downwardly-facing surface 172.

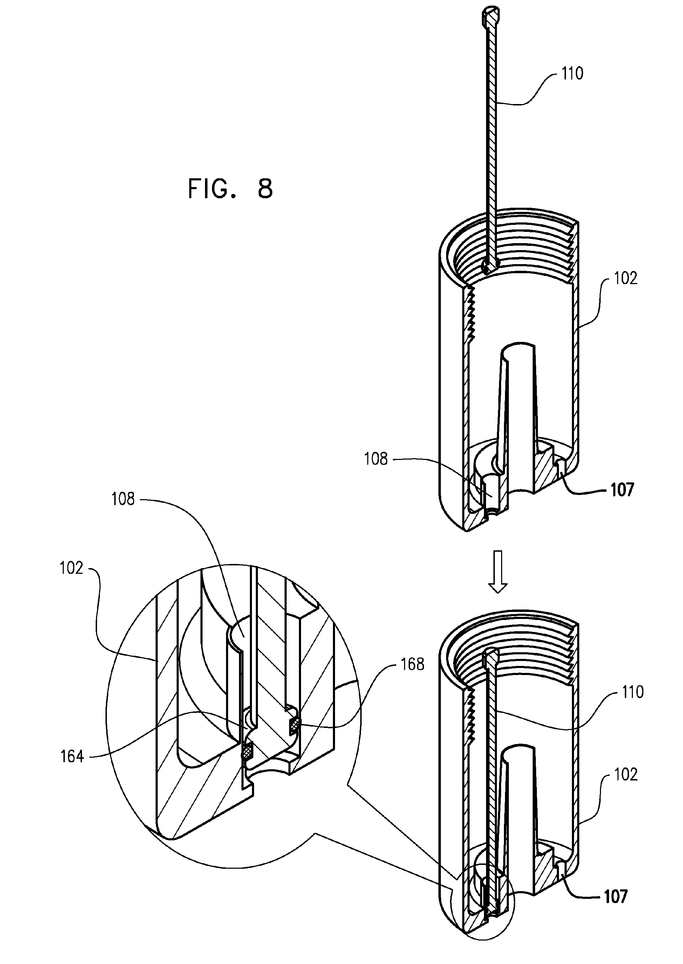

Reference is now made to Fig. 8, which is a simplified illustration of a first step in the assembly of the oil filter assembly of Figs. 1 - 7B. As seen in Fig. 8, the oil drain passageway sealing rod assembly 110 is inserted into sealing engagement with oil drain passageway 108, such that sealing ring 168 provides a seal between an internal surface of oil drain passageway 108 and recess 166, thereby preventing oil from draining from generally cylindrical inner volume 104 to the outside of the filter housing 102 via oil drain passageway 108.

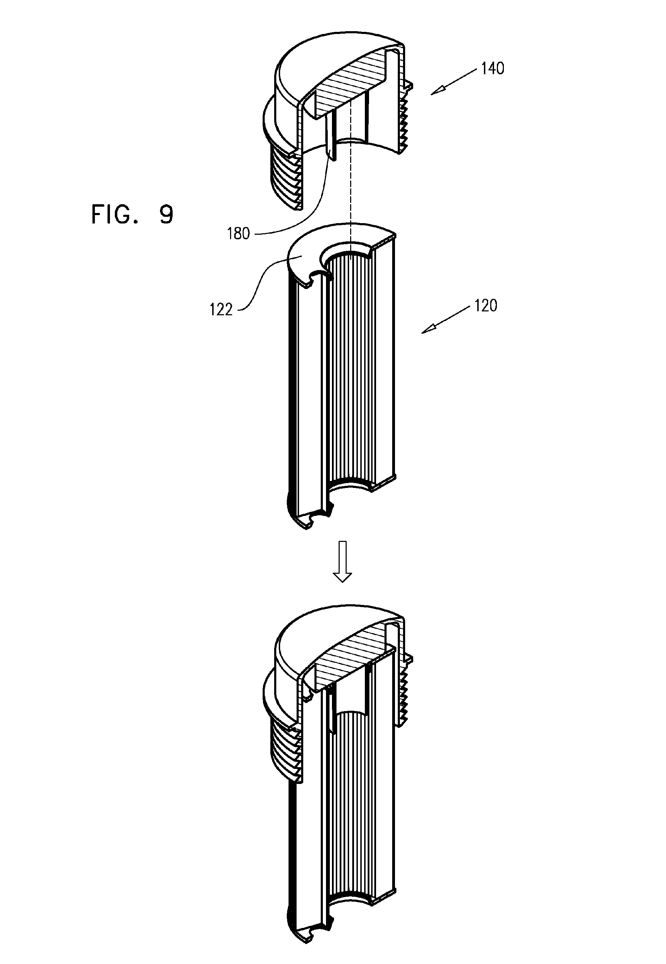

Reference is now made to Fig. 9, which is a simplified illustration of a second step in the assembly of the oil filter assembly of Figs. 1 - 3, wherein top element 140 is operatively engaged with filter element 120 such that central, downwardly extending hollow protrusion 180 extends through top end portion 122 and central, downwardly extending hollow protrusion 180 sealingly engages top end portion 122.

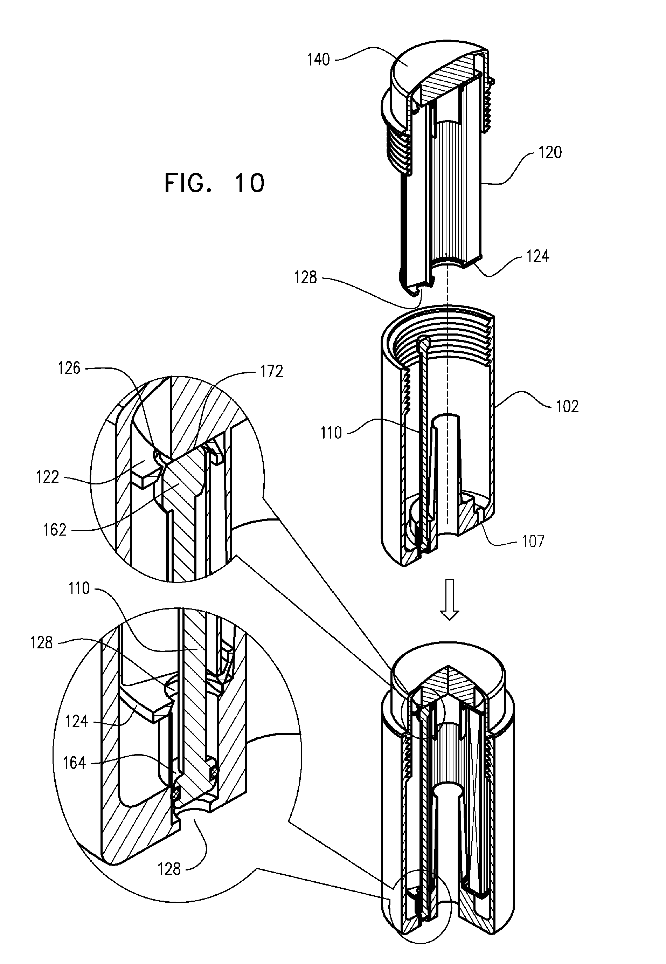

Reference is now made to Fig. 10, which is a simplified illustration of a third and final step in the assembly of the oil filter assembly of Figs. 1 - 3. As seen in Fig. 10, the joined top element 140 and filter element 120 are inserted and threadably and sealingly engaged with the filter housing 102. It is seen that the azimuthal arrangement of the filter element 120 is such that the oil drain passageway sealing rod assembly 110 extends initially through aperture 128 of bottom end portion 124 of filter element 120 and thereafter tapered end portion 162 extends through aperture 126 of top end portion 122 of filter element 120 and engages downwardly facing surface 172. In this way, the oil drain passageway sealing rod assembly 110 is securely retained in sealing engagement with the oil drain passageway 108. The thus-assembled filter is sealed, inter alia, by the sealing engagement of sealing ring 168 with the internal surface of oil drain passageway 108 and recess 166, thereby preventing oil from draining from generally cylindrical inner volume 104 to the outside of the filter housing 102 via oil drain passageway 108.

It will be appreciated by persons skilled in the art that the present invention is not limited to what has been particularly shown and described hereinabove. Rather the scope of the present invention includes both combinations and subcombinations of various elements described hereinabove as well as modifications and variations thereof which are not in the prior art.

## Claims

1. A replaceable oil filter sub-assembly for use with an oil filter housing having an oil drain passageway extending outwardly from an interior volume of said oil filter housing, the oil filter sub-assembly comprising:
a filter element having a filter medium defining an upstream side and a downstream side of said filter element; and
an oil drain passageway sealing rod assembly having a first end configured for oil sealing engagement with said oil drain passageway of said oil filter housing, said oil drain passageway sealing rod assembly being separate from said filter element and extending through said interior volume of said filter housing at said upstream side of said filter element.

2. A replaceable oil filter sub-assembly according to claim 1 and wherein said filter element comprises top and bottom end portions and said oil drain passageway sealing rod assembly extends through at least one of an aperture and a recess formed in at least said bottom end portion.

3. A replaceable oil filter sub-assembly according to claim 2 and wherein said filter medium defines an elongate recess between said top end portion and said bottom end portion.

4. A replaceable oil filter sub-assembly according to claim 1 and also comprising a top element which is threadably and sealingly engageable with said filter housing and wherein engagement of said top element and said filter housing retains said oil drain passageway sealing rod assembly in sealing engagement with said oil drain passageway of said oil filter housing.

5. A replaceable oil filter sub-assembly according to claim 1 and wherein said oil drain passageway sealing rod assembly comprises:
an elongate, generally cylindrical portion; and
a generally tapered second end portion.

6. A replaceable oil filter sub-assembly according to claim 1 and wherein said first end comprises:
a sealing ring retaining portion, defining a circumferential recess; and
a sealing ring seated in said circumferential recess.

7. An oil drain passageway sealing rod assembly, for use with a replaceable oil filter sub-assembly and an oil filter housing having an oil drain passageway extending outwardly from an interior volume of said oil filter housing, the oil drain passageway sealing rod assembly comprising:
a first end configured for oil sealing engagement with said oil drain passageway of said oil filter housing, said oil drain passageway sealing rod assembly extending through said interior volume of said filter housing at said upstream side of said filter element.

8. An oil drain passageway sealing rod assembly according to claim 7 and wherein said sealing rod assembly comprises:
an elongate, generally cylindrical portion; and
a generally tapered second end portion.

9. An oil drain passageway sealing rod assembly according to claim 7 and wherein said first end comprises:
a sealing ring retaining portion, defining a circumferential recess; and
a sealing ring seated in said circumferential recess.

10. A method for assembling an oil filter assembly, said oil filter assembly including a top element, an oil filter housing, having an oil drain passageway extending outwardly from an interior volume of said oil filter housing, and a replaceable oil filter sub-assembly, said replaceable oil filter sub-assembly including an oil drain passageway sealing rod assembly and a filter element, the method comprising:
inserting said oil drain passageway sealing rod assembly into sealing engagement with said oil drain passageway;
operatively engaging said top element with said filter element, thereby forming a joined top element and filter element; and
thereafter, inserting said joined top element and filter element into threadable, sealing engagement with said filter housing.
